# EUROPEAN PATENT APPLICATION

(11) **EP 4 782 779 A1**
(43) Date of publication of application: **29.07.2026**
(21) Application number: 24872940.2
(22) Date of filing: 26.09.2024
(51) Int. Cl.: F28D 20/00

(54) **THERMAL ENERGY STORAGE DEVICE HAVING TEMPERATURE GRADIENT**

(30) Priority: 27.09.2023 KR 20230130748; 25.09.2024 KR 20240130117
(71) Applicant: Gigaette Co., Ltd., Daejeon 34051 (KR)
(72) Inventor: PARK, Hoon Jin, Sejong 30092 (KR); LEE, Sung Kwang, Asan-si Chungcheongnam-do 34167 (KR)
(74) Representative: BCKIP Part mbB
(86) International application number: PCT/KR2024/014559
(87) International publication number: WO 2025/071232

(57) **Abstract**

An object of the present invention is to provide a thermal energy storage device that is capable of smoothly storing thermal energy in a single tank and that, being convenient to operate and manage, can extend the range of application far beyond that of the prior art. The thermal energy storage device having a temperature gradient of the present invention may comprise: a storage tank in which a thermal storage fluid is accommodated; a cell partition plate that separates the storage tank into two or more cells; a cell connection pipe connecting an upper portion of one cell and a lower portion of the other cell among neighboring cells; a low-temperature section pump for transferring a low-temperature thermal storage fluid; and a high-temperature section pump for transferring a high-temperature thermal storage fluid.

## Description

### TECHNICAL FIELD

The present invention relates to a thermal energy storage device having a temperature gradient, and more particularly, to a thermal energy storage device having a temperature gradient that enables high-temperature energy generated by solar heat or the like, or electricity generated by wind power, solar power, or the like, to be converted into high-temperature energy and to be stored.

### BACKGROUND

At present, when energy consumption is being maximized due to industrial development, various studies are actively being conducted with the aim of preventing energy waste and utilizing energy more efficiently. One such study relates to an Energy Storage System (ESS), which operates in a manner such as storing excess power generated by solar or wind power generation, where load adjustment is difficult, and transmitting the stored power when there is a temporary shortage of power, or the like.

One example of a high-temperature energy storage device is the molten salt type. In the case of the solar thermal type, surplus solar heat is collected to raise the temperature of synthetic oil or the like, which is then used as a working fluid to store thermal energy in molten salt in the form of thermal energy. That is, thermal energy is stored as thermal energy.

In the case of solar power or wind power, on the other hand, surplus electrical energy is converted into thermal energy, which is likewise stored in molten salt in the form of thermal energy. At a time when electricity is needed, power generation is carried out using energy contained in the stored high-temperature molten salt. In this case, the principle is to convert electrical energy into thermal energy and store it.

In addition to the molten salt type, a method of storing electrical energy in a battery has also traditionally been used in cases where power is generated, such as by solar power or wind power. Since the battery storage method is uneconomical when the surplus power is large-capacity, a method of converting electrical energy into thermal energy and storing it has been more widely adopted and used. As one example, KR 2007-0022679 ("Method and Apparatus for Storing Thermal Energy", published February 27, 2007) discloses a device that, so as to be capable of storing electrical energy or renewable energy during a supply off-peak period, heats an interior region of a graphite body when it is necessary to store thermal energy, and recovers heat by means of a heat exchanger when it is necessary to use the thermal energy.

Research and development of such energy storage device technology is being actively conducted on an ongoing basis, and in most cases the devices are designed to be optimized for their development purposes, with the result that their range of application tends to be formed somewhat narrowly. For example, the molten salt thermal storage device described above is very well suited for storing high-temperature energy, particularly thermal energy of the solar thermal type, but in order to utilize it with solar power or wind power or the like, a separate device for converting electricity into heat is required, and there are quite a number of cases where it is ill-suited for use, such as being unsuitable for storing low-quality electrical energy. Furthermore, in the case of the molten salt thermal storage device, there is also the problem that the system configuration and operation are complex, because thermal energy is stored by installing two tanks, namely a low-temperature storage tank and a high-temperature storage tank.

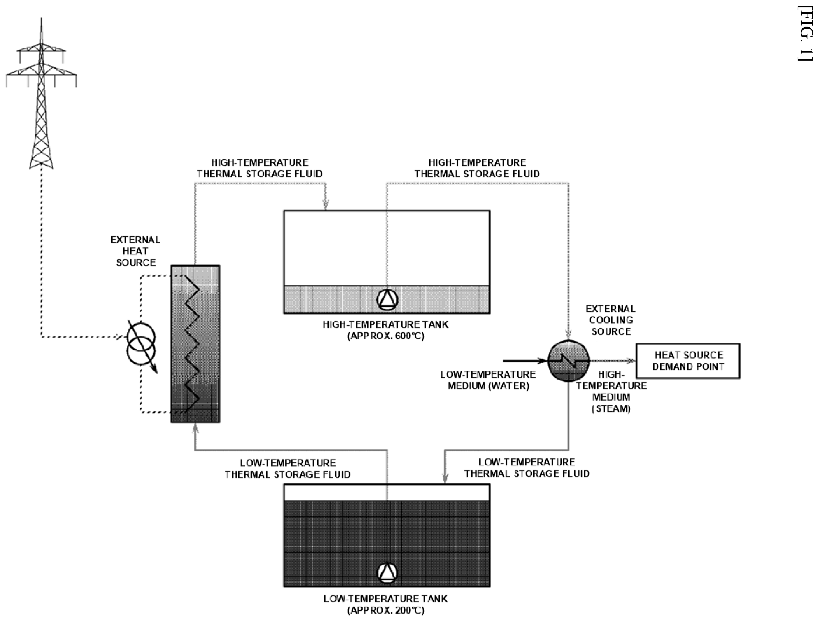

FIG. 1 shows a conceptual diagram of a conventional two-tank molten salt thermal energy storage system. The conventional two-tank system will be described in greater detail with reference to FIG. 1 as follows.

The "external heat source" in FIG. 1 literally refers to a place where heat to be used as energy is collected from outside, and may specifically be a solar thermal storage device, an electric heater, a nuclear reactor, or the like. When the thermal storage fluid is heated by such an external heat source, the high-temperature thermal storage fluid moves to and is stored in the high-temperature tank, as shown in FIG. 1. The high-temperature thermal storage fluid in the high-temperature tank generally forms a temperature environment of approximately 600°C. When the thermal energy held by this high-temperature thermal storage fluid moves to an "external cooling source", the heat held by the high-temperature thermal storage fluid can be transferred to a "heat source demand point" using another medium. In this process, the high-temperature thermal storage fluid loses thermal energy and is "cooled", which is why this heat transfer device is referred to as an "external cooling source". Meanwhile, the medium used here may be any medium capable of transferring heat effectively and that is economical and widely available, and as specifically indicated in FIG. 1, water is generally used. The low-temperature thermal storage fluid, whose temperature has dropped after supplying thermal energy to the heat source demand point via the medium in this manner, moves to and is stored in a low-temperature tank. The low-temperature thermal storage fluid in the low-temperature tank generally forms a temperature environment of approximately 200°C. This low-temperature thermal storage fluid then moves back to the external heat source to receive thermal energy, thereby achieving circulation of the thermal storage fluid.

In the conventional two-tank system as described above, two tanks were used: a high-temperature tank for storing high-temperature thermal storage fluid and a low-temperature tank for storing low-temperature thermal storage fluid. Accordingly, a considerable volume of space is required to install each of the two tanks, and since neither tank is always completely full, a considerable amount of surplus space naturally always arises. As described above, the conventional two-tank system inevitably involves a considerable waste of space, resulting in limitations on installation and capacity, as well as the problems of complex configuration and operation as described above.
[Patent Document 1] KR 2007-0022679 A ("Method and Apparatus for Storing Thermal Energy", published February 27, 2007)
[Patent Document 2] KR 2023-0113455 A ("Electrical and High-Temperature Energy Storage Device", published July 31, 2023)

### SUMMARY

### TECHNICAL OBJECTS

Accordingly, the present invention has been devised to solve the problems of the prior art as described above, and an object of the present invention is to provide a thermal energy storage device that is capable of smoothly storing thermal energy in a single tank and that, being convenient to operate and manage, can extend the range of application far beyond that of the prior art. More specifically, an object of the present invention is to provide a thermal energy storage device that utilizes a difference in density according to the temperature of the thermal storage fluid to sequentially store the thermal storage fluid in a single tank so as to have a temperature gradient and, when necessary, to sequentially withdraw the thermal storage fluid so as to have a temperature distribution.

### TECHNICAL SOLUTION

A thermal energy storage device (100) having a temperature gradient according to the present invention for achieving the objects as described above may comprise: a storage tank (101) in which a thermal storage fluid is accommodated; a cell partition plate (105) that separates the storage tank (101) into a plurality of cells; a cell connection pipe (155) that connects an upper portion of one cell and a lower portion of the other cell among a pair of mutually neighboring cells; a low-temperature section pump (115) provided in a cell located at one end among the cells in the storage tank (101) and configured to transfer a low-temperature thermal storage fluid; and a high-temperature section pump (125) provided in a cell located at the other end among the cells in the storage tank (101) and configured to transfer a high-temperature thermal storage fluid.

In the thermal energy storage device (100), a cell located at one end among the cells in the storage tank (101) is referred to as a low-temperature section (110), and a cell located at the other end among the cells in the storage tank (101) is referred to as a high-temperature section (120); the thermal storage fluid stored in the low-temperature section (110) is formed at a lower temperature than the thermal storage fluid stored in the other cells, and the thermal storage fluid stored in the high-temperature section (120) is formed at a higher temperature than the thermal storage fluid stored in the other cells; and a temperature gradient is formed in the thermal storage fluid in the storage tank (101) such that the temperature of the thermal storage fluid stored in each cell gradually increases from the low-temperature section (110) toward the high-temperature section (120).

In the thermal energy storage device (100), the low-temperature section (110) is provided with a low-temperature discharge pipe (111) connected to the low-temperature section pump (115) and configured to discharge a low-temperature thermal storage fluid in the low-temperature section (110) to the exterior, and a low-temperature inlet pipe (112) communicating with a lower portion that is relatively cooler within the low-temperature section (110) and configured to receive low-temperature thermal storage fluid from the exterior; and the high-temperature section (120) is provided with a high-temperature discharge pipe (121) connected to the high-temperature section pump (125) and configured to discharge a high-temperature thermal storage fluid in the high-temperature section (120) to the exterior, and a high-temperature inlet pipe (122) communicating with an upper portion that is relatively hotter within the high-temperature section (120) and configured to receive high-temperature thermal storage fluid from the exterior.

In the thermal energy storage device (100), the cell connection pipe (155) that places a pair of mutually neighboring cells in communication with each other comprises an upper flow port (151) communicating with an upper portion that is relatively hotter within the one cell on the side of the low-temperature section (110) or the low-temperature section (110), and a lower flow port (152) communicating with a lower portion that is relatively cooler within the other cell on the side of the high-temperature section (120) or the high-temperature section (120); and the thermal energy storage device is formed so as to minimize a temperature difference between the thermal storage fluids transferred through and between the cells, by bringing into direct communication with each other the thermal storage fluid in the one cell that is relatively cooler as between the one cell and the other cell and that is relatively hotter as between the upper portion and the lower portion, and the thermal storage fluid in the other cell that is relatively hotter as between the one cell and the other cell and that is relatively cooler as between the upper portion and the lower portion.

The cell connection pipe (155) is provided with a flow rate controller (153) for controlling a flow rate of the thermal storage fluid passing through the cell connection pipe (155).

In the thermal energy storage device (100), in an energy storage mode: a high-temperature thermal storage fluid heated in an external heat source flows into the high-temperature section (120) at the other end through the high-temperature inlet pipe (122); as the thermal storage fluid in the high-temperature section (120) is transferred from the other side to one side of the storage tank (101) through at least one cell connection pipe (155), a temperature gradient is formed such that the temperature of the cells decreases from high temperature to low temperature going from the other side to one side; and the low-temperature thermal storage fluid, whose temperature has decreased in the course of being transferred, is delivered to the external heat source through the low-temperature section pump (115) provided in the low-temperature section (110) at one end, and is again heated in the external heat source, thereby achieving circulation.

In the thermal energy storage device (100), in an energy recovery mode: a low-temperature thermal storage fluid cooled in an external cooling source flows into the low-temperature section (110) at one end through the low-temperature inlet pipe (112); as the thermal storage fluid in the low-temperature section (110) is transferred from one side to the other side of the storage tank (101) through at least one cell connection pipe (155), a temperature gradient is formed such that the temperature of the cells increases from low temperature to high temperature going from one side to the other side; and the high-temperature thermal storage fluid, whose temperature has risen in the course of being transferred, is delivered to the external cooling source through the high-temperature section pump (125) provided in the high-temperature section (120) at the other end, and is again cooled in the external cooling source, thereby achieving circulation.

The thermal energy storage device (100) may further comprise at least one unit section (150) each formed as a cell disposed between the low-temperature section (110) and the high-temperature section (120).

The thermal energy storage device (100) comprises a plurality of unit sections (150), and at least one unit section (150) selected from among the plurality of unit sections (150) forms a medium-temperature section (130); and the medium-temperature section (130) is provided with a medium-temperature section pump (135), a medium-temperature discharge pipe (131) connected to the medium-temperature section pump (135) and configured to discharge the thermal storage fluid in the medium-temperature section (130) to the exterior, and a medium-temperature inlet pipe (132) communicating with the interior of the medium-temperature section (130) and configured to receive thermal storage fluid from the exterior.

In the thermal energy storage device (100), when a connected assembly of a plurality of cells in which a temperature gradient is formed so as to go from low temperature to high temperature from one side to the other side is referred to as a unit row: a plurality of unit rows are stacked and arranged in a parallel-connected form, whereby a temperature gradient is formed in the stack as a whole such that the temperature goes from low temperature to high temperature from one side to the other side; or a plurality of unit rows are stacked and arranged in a series-connected form, whereby a temperature gradient is formed such that the temperature goes from low temperature to high temperature while sequentially following the unit rows.

In the thermal energy storage device (100), the direction of temperature gradient within a unit row and the direction of stacked arrangement of the unit rows are formed perpendicular to each other, and: the direction of temperature gradient is the horizontal direction, the direction of stacked arrangement is the vertical direction, and the direction of gravity is the height direction, whereby the stack of unit rows forms a rectangular parallelepiped; or the direction of temperature gradient is the tangential direction, the direction of stacked arrangement is the radial direction, and the direction of gravity is the height direction, whereby the stack of unit rows forms a cylindrical shape.

The thermal energy storage device (100) is configured such that the thermal storage fluid is able to flow through boundary surfaces between unit rows.

The thermal energy storage device (100) may further comprise a heat recovery pipe (140) in the form of a pipe that sequentially passes through the cells in the storage tank (101) from the low-temperature section (110) to the high-temperature section (120), through which a heat recovery fluid flows.

The thermal energy storage device (100) may further comprise a bubble injection pipe (160) configured to introduce a bubbling fluid into a lower portion of the cells in the storage tank (101).

### EFFECTS OF THE DISCLOSURE

According to the present invention, there is a great advantage in that high-temperature energy can be stored in a single tank in which the fluid level is maintained constant.

Furthermore, the number of tanks is minimized to a single tank, thereby minimizing pumps, field devices, piping, and the like, resulting in an economical effect of minimizing initial investment costs and operating costs.

Furthermore, since the fluid level is constant, the hydrostatic head pressure applied to the storage tank is constant, and accordingly there is no repeated loading due to changes in the fluid level, thereby eliminating the risk of structural fatigue failure due to repeated loading and achieving an effect of enhancing the structural safety of the tank.

Furthermore, since the pumps installed in the storage tank are always assured of a stable fluid level, an effect of avoiding pump damage or instability in pump operation due to a drop in fluid level is achieved.

In addition, according to the present invention, since the device itself has a simple structure, not only are ease of manufacture and economical efficiency improved, but there is also an effect that simple large-capacity scaling is possible using the module concept.

### BRIEF DESCRIPTION OF THE DRAWINGS

FIG. 1 is a conceptual diagram of a conventional two-tank molten salt thermal energy storage system.
FIG. 2 is a conceptual diagram showing the connection between the thermal energy storage device having a temperature gradient of the present invention and the exterior.
FIG. 3 shows the thermal energy storage device having a temperature gradient of the present invention.
FIG. 4 shows an embodiment having a plurality of cells.
FIG. 5 shows an energy storage mode.
FIG. 6 shows an energy recovery mode.
FIG. 7 shows a detailed configuration of the cell connection pipe.
FIG. 8 shows inflow and outflow of the thermal storage medium in a medium-temperature section.
FIG. 9 shows large-capacity scaling using a parallel configuration - Parallel Configuration 1 (arrows indicate energy discharge mode).
FIG. 10 shows large-capacity scaling using a parallel configuration - Parallel Configuration 2 (arrows indicate energy discharge mode).
FIG. 11 shows large-capacity scaling using a rectangular serial configuration - Rectangular Serial Configuration (arrows indicate energy discharge mode).
FIG. 12 shows a circular serial configuration for large-capacity scaling - Circular Serial Configuration (arrows indicate energy discharge mode).
FIG. 13 shows an embodiment of heat recovery using a pipe.

### [DESCRIPTION OF REFERENCE NUMERALS]

| | | | |
|---|---|---|---|
| 100: | Thermal energy storage device | | |
| 101: | Storage tank | 105: | Cell partition plate |
| 110: | Low-temperature section | 115: | Low-temperature section pump |
| 111: | Low-temperature discharge pipe | 112: | Low-temperature inlet pipe |
| 120: | High-temperature section | 125: | High-temperature section pump |
| 121: | High-temperature discharge pipe | 122: | High-temperature inlet pipe |
| 130: | Medium-temperature section | 135: | Medium-temperature section pump |
| 131: | Medium-temperature discharge pipe | 132: | Medium-temperature inlet pipe |
| 140: | Heat recovery pipe | 141: | Heat recovery inlet |
| 142: | Heat recovery outlet | 143: | Heat recovery bypass |
| 150: | Unit section | 155: | Cell connection pipe |
| 151: | Upper flow port | 152: | Lower flow port |
| 153: | Flow rate controller | 160: | Bubble injection pipe |

### DETAILED DESCRIPTION OF EMBODIMENTS

Hereinafter, the thermal energy storage device having a temperature gradient according to the present invention having the configuration as described above will be described in detail with reference to the accompanying drawings.

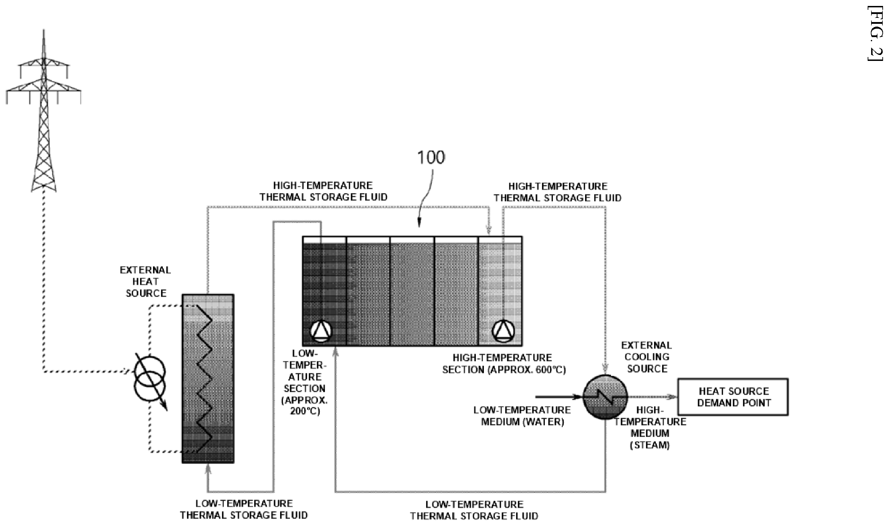

FIG. 2 shows a conceptual diagram of the connection between the thermal energy storage device having a temperature gradient of the present invention and the exterior. Referring back to FIG. 1, in the case of the conventional two-tank thermal energy storage device, two tanks, namely a high-temperature tank and a low-temperature tank, were necessarily required. However, the thermal energy storage device of the present invention uses only a single storage tank, with the interior of the storage tank being divided into a plurality of cells, and is configured such that the temperatures of the thermal storage fluids stored in the respective cells are gradually graded from low temperature to high temperature. At this time, since the temperature difference between cells that are close to each other is not very large, the energy loss due to heat transfer is not significantly large. However, if the number of cells is sufficiently increased to widen the distance between the low-temperature section and the high-temperature section, it becomes possible to stably maintain a temperature difference between the low-temperature section and the high-temperature section as large as desired. In this manner, the thermal energy storage device of the present invention is configured to have a temperature gradient, thereby enabling stable storage and operation of a thermal storage fluid covering the range from high temperature to low temperature within a single tank. Accordingly, as explicitly shown in FIG. 2, by reducing the number of tanks, restrictions such as those on installation space can be greatly relaxed, and the like, thereby fundamentally resolving the various problems that arose from the need for two tanks in the prior art.

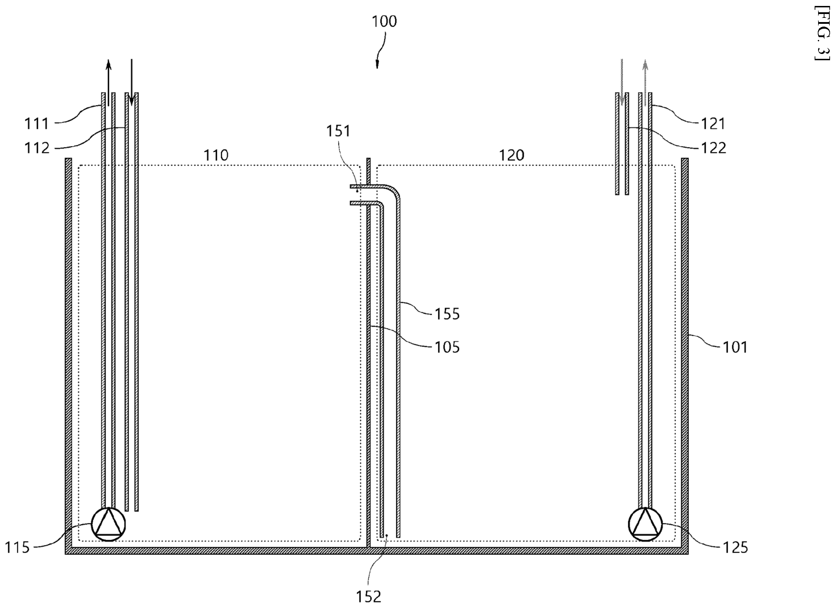

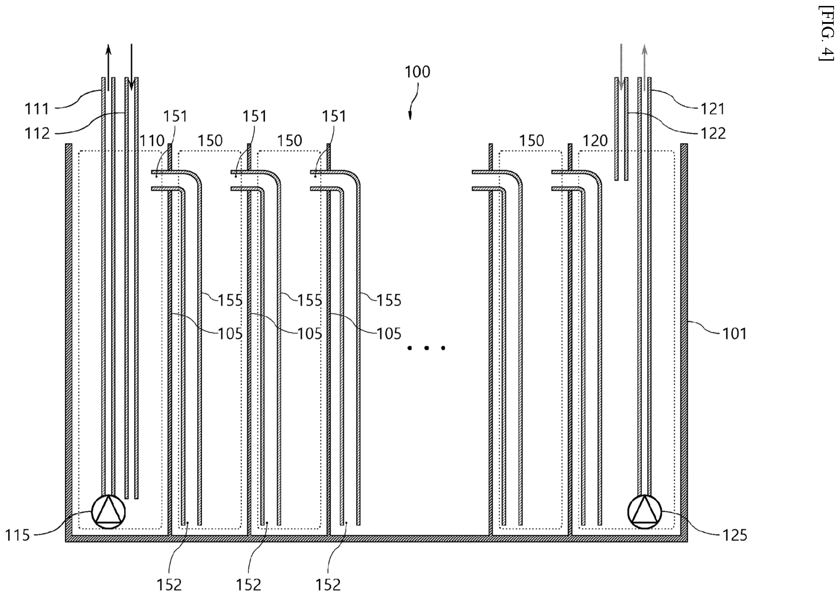

FIG. 3 shows the simplest configuration of the thermal energy storage device having a temperature gradient of the present invention. The thermal energy storage device (100) having a temperature gradient of the present invention may comprise: a storage tank (101) in which a thermal storage fluid is accommodated; a cell partition plate (105) that separates the storage tank (101) into a plurality of cells; a cell connection pipe (155) that connects an upper portion of one cell and a lower portion of the other cell among a pair of mutually neighboring cells; a low-temperature section pump (115) provided in a cell located at one end among the cells in the storage tank (101) and configured to transfer a low-temperature thermal storage fluid; and a high-temperature section pump (125) provided in a cell located at the other end among the cells in the storage tank (101) and configured to transfer a high-temperature thermal storage fluid. FIG. 4 shows an embodiment having a plurality of cells. As shown, when the cell partition plate (105) is installed in plurality, the storage tank can be divided into a plurality of cells, and accordingly the temperature gradient can also be made more gradual.

A more specific description is as follows. The thermal energy storage device (100) of the present invention is provided with at least one cell partition plate (105) within the storage tank (101), thereby forming at least two cells, i.e., mutually isolated spaces. The storage tank (101) itself is of course hermetically sealed and thermally insulated from the exterior, so as to minimize heat exchange with the exterior. The thermal storage fluids stored in the respective cells have their heat exchange with each other blocked to a certain degree by the cell partition plate (105) (although, to be very precise, some heat transfer may occur by conduction through the cell partition plate (105)), enabling thermal storage fluids having a temperature difference to be stably stored in the respective cells. However, since energy storage or recovery cannot be achieved if the thermal storage fluid is merely stored in each cell, it must be possible for the thermal storage fluid to be transferred between cells. At this time, by virtue of the various configurations of the present invention described below, while the internal temperature conditions of each individual cell are stably maintained, the operations of storing or recovering energy can be performed smoothly when viewed as a whole.

First, a cell located at one end among the cells in the storage tank (101) shall be referred to as a low-temperature section (110), and a cell located at the other end among the cells in the storage tank (101) shall be referred to as a high-temperature section (120). FIG. 3 shows the case where the thermal energy storage device (100) is composed of only the low-temperature section (110) and the high-temperature section (120), i.e., two cells, and FIG. 4 shows the case where it is composed of more cells. In the case of FIG. 4, cells disposed between the low-temperature section (110) and the high-temperature section (120) shall be referred to as unit sections (150).

As described above, thermal storage fluids having a temperature difference can be stably stored in the respective cells separated by the cell partition plate (105). In the present invention, the thermal storage fluid stored in the low-temperature section (110) is formed at a lower temperature than the thermal storage fluid stored in the other cells, and the thermal storage fluid stored in the high-temperature section (120) is formed at a higher temperature than the thermal storage fluid stored in the other cells. In the case where there are only two cells in the storage tank (101) as in FIG. 3, one of the two cells will be the low-temperature section (110) and the other will be the high-temperature section (120). Alternatively, in the case where there are two or more cells in the storage tank (101) as in FIG. 4, the cell at one end will be the low-temperature section (110) and the cell at the other end will be the high-temperature section (120), and a temperature gradient can be formed in the thermal storage fluid in the storage tank (101) such that the temperature of the thermal storage fluid stored in each cell gradually increases from the low-temperature section (110) toward the high-temperature section (120).

The low-temperature section (110) and the high-temperature section (120) are respectively provided with the low-temperature section pump (115) and the high-temperature section pump (125), so as to enable discharge of low-temperature or high-temperature thermal storage fluid as necessary. More specifically, the low-temperature section (110) is provided with: a low-temperature discharge pipe (111) connected to the low-temperature section pump (115) and configured to discharge a low-temperature thermal storage fluid in the low-temperature section (110) to the exterior; and a low-temperature inlet pipe (112) communicating with a lower portion that is relatively cooler within the low-temperature section (110), and configured to receive low-temperature thermal storage fluid from the exterior. The high-temperature section (120) is also provided with: a high-temperature discharge pipe (121) connected to the high-temperature section pump (125) and configured to discharge a high-temperature thermal storage fluid in the high-temperature section (120) to the exterior; and a high-temperature inlet pipe (122) communicating with the upper portion, which is relatively hotter within the high-temperature section (120), and configured to receive high-temperature thermal storage fluid from the exterior.

The low-temperature section (110), the high-temperature section (120), or the unit sections (150) therebetween as described above are separated from each other by the cell partition plate (105), and the cell partition plate (105) is also provided with the cell connection pipe (155), so that the thermal storage fluid can move between cells. However, the cell connection pipe (155) has the following configuration. The cell connection pipe (155) that places a pair of mutually neighboring cells in communication with each other comprises: an upper flow port (151) communicating with an upper portion that is relatively hotter within the one cell on the side of the low-temperature section (110) or the low-temperature section (110); and a lower flow port (152) communicating with a lower portion that is relatively cooler within the other cell on the side of the high-temperature section (120) or the high-temperature section (120). Accordingly, through the cell connection pipe (155), the thermal storage fluid in the one cell that is relatively cooler as between the one cell and the other cell and that is relatively hotter as between the upper portion and the lower portion, and the thermal storage fluid in the other cell that is relatively hotter as between the one cell and the other cell and that is relatively cooler as between the upper portion and the lower portion, are brought into direct communication with each other. That is, the cell connection pipe (155) has a structure that enables the fluids having the smallest mutual temperature difference among the thermal storage fluids in neighboring cells to directly meet each other. As a result, by being formed so as to minimize the temperature difference between the thermal storage fluids transferred through and between the cells, even when transfer of thermal storage fluid between cells occurs, the temperature of the thermal storage fluid stored in each cell can be maintained quite stably.

The operation of the thermal energy storage device (100) will be described in more detail below.

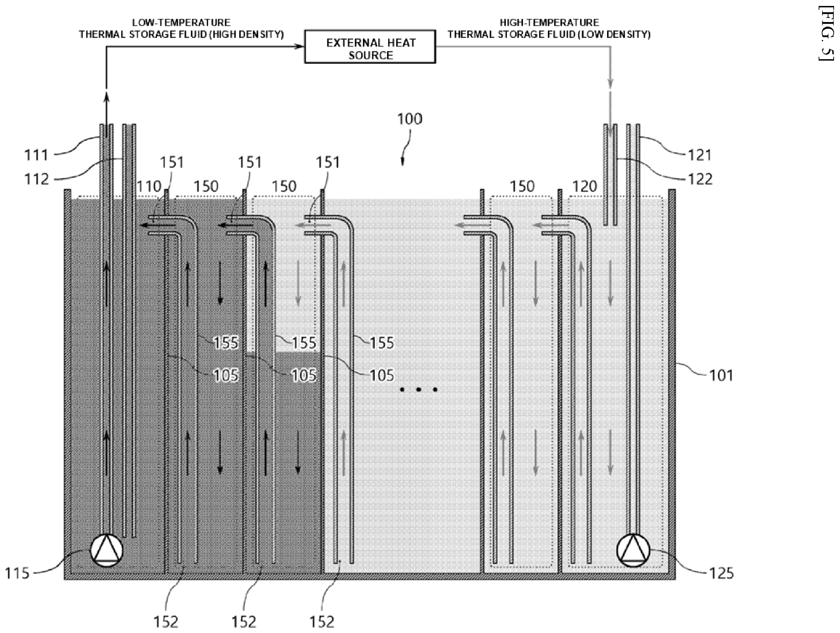

FIG. 5 shows the energy storage mode. In the energy storage mode, the thermal energy storage device (100) having a temperature gradient sends a low-temperature thermal storage fluid to an external heat source while receiving a high-temperature thermal storage fluid therefrom, and internally moves the thermal storage fluid through the cells and the cell connection pipe (155) for storage in the storage tank (101). More specifically, in the energy storage mode, first, a high-temperature thermal storage fluid heated in the external heat source flows into the high-temperature section (120) at the other end through the high-temperature inlet pipe (122). Next, as the thermal storage fluid in the high-temperature section (120) is transferred from the other side to one side of the storage tank (101) through at least one cell connection pipe (155), a temperature gradient is formed such that the temperature of the cells decreases from high temperature to low temperature going from the other side to one side. Next, the low-temperature thermal storage fluid, whose temperature has decreased in the course of being transferred, is delivered to the external heat source through the low-temperature section pump (115) provided in the low-temperature section (110) at one end, and is again heated in the external heat source, thereby achieving circulation.

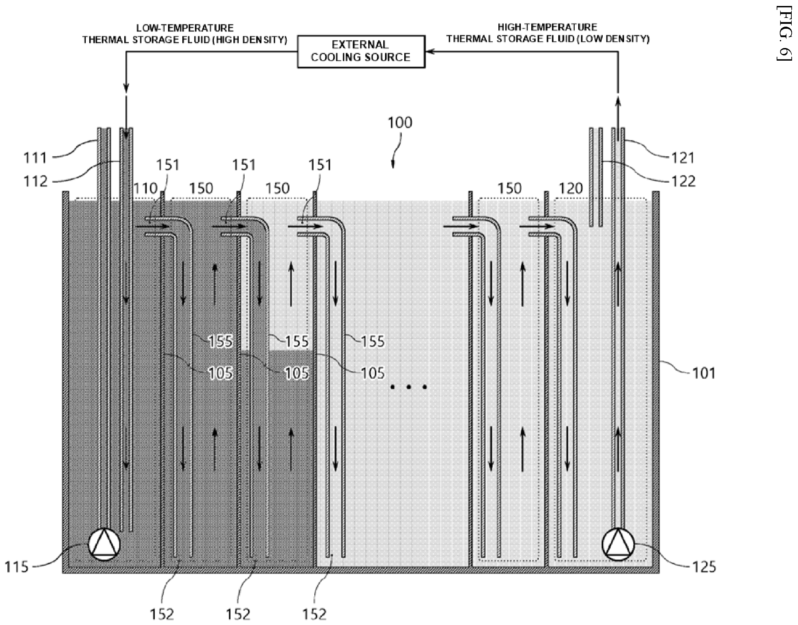

FIG. 6 shows the energy recovery mode. In the energy recovery mode, the thermal energy storage device (100) having a temperature gradient sends a high-temperature thermal storage fluid to an external cooling source while receiving a low-temperature thermal storage fluid therefrom, and internally moves the thermal storage fluid through the cells and the cell connection pipe (155) for storage in the storage tank (101). More specifically, in the energy recovery mode, first, a low-temperature thermal storage fluid cooled in the external cooling source flows into the low-temperature section (110) at one end through the low-temperature inlet pipe (112). Next, as the thermal storage fluid in the low-temperature section (110) is transferred from one side to the other side of the storage tank (101) through at least one cell connection pipe (155), a temperature gradient is formed such that the temperature of the cells increases from low temperature to high temperature going from one side to the other side. Next, the high-temperature thermal storage fluid, whose temperature has risen in the course of being transferred, is delivered to the external cooling source through the high-temperature section pump (125) provided in the high-temperature section (120) at the other end, and is again cooled in the external cooling source, thereby achieving circulation.

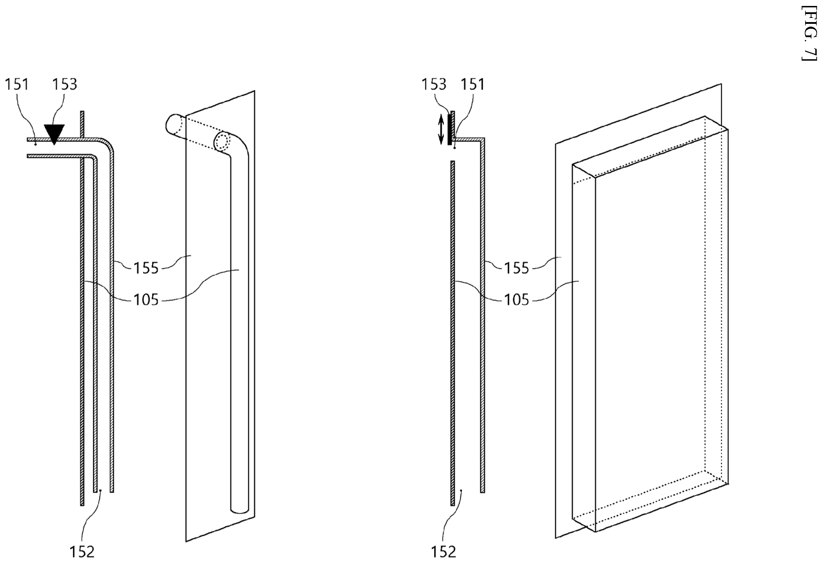

FIG. 7 shows a detailed configuration of the cell connection pipe. The cell connection pipe (155) may be in the form of a pipe having a circular cross-section, as shown in the lefthand diagram of FIG. 7, or in the form of a duct having a rectangular cross-section, as shown in the right-hand diagram of FIG. 7. In this case, it is preferable that the cell connection pipe (155) be provided with a flow rate controller (153) for controlling the flow rate of the thermal storage fluid passing through the cell connection pipe (155). If the flow velocity inside the cell connection pipe (155) is too low, mixing due to the density difference inside the cell connection pipe (155) may increase. To prevent this, the flow velocity must be maintained at or above an appropriate velocity. The flow rate controller (153) is provided specifically for this purpose, and controls the flow velocity by adjusting the passage area for the thermal storage fluid. The flow rate controller (153) may be a valve when the cell connection pipe (155) is a pipe, or a damper when it is a duct.

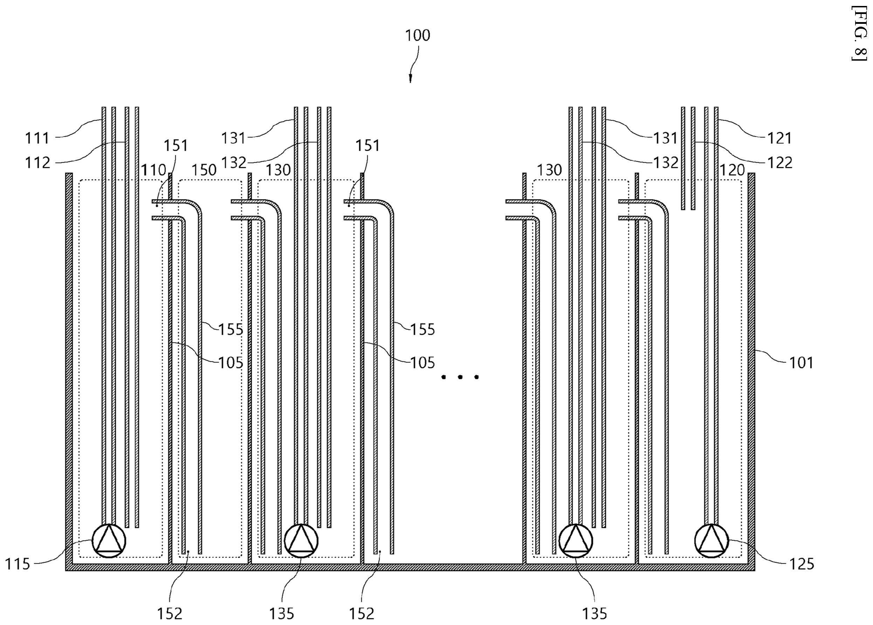

FIG. 8 shows an embodiment in which the thermal storage medium flows in and out at a medium-temperature section. As described above, the thermal energy storage device (100) of the present invention may comprise a plurality of unit sections (150). In this case, at least one unit section (150) selected from among the plurality of unit sections (150) may be configured to form a medium-temperature section (130). While other unit sections (150) merely serve to store the thermal storage fluid at an intermediate stage in which the thermal storage fluid is transferred between one side and the other side, the medium-temperature section (130) may allow additional inflow and outflow of thermal storage fluid (such as molten salt) in the middle. More specifically, the medium-temperature section (130) may be provided with: a medium-temperature section pump (135); a medium-temperature discharge pipe (131) connected to the medium-temperature section pump (135) and configured to discharge the thermal storage fluid in the medium-temperature section (130) to the exterior; and a medium-temperature inlet pipe (132) communicating with the interior of the medium-temperature section (130) and configured to receive thermal storage fluid from the exterior.

That is, the medium-temperature section (130) has a configuration similar to that of the low-temperature section (110) or the high-temperature section (120), and is formed so as to enable inflow or outflow of thermal storage fluid at an appropriate intermediate temperature between low temperature and high temperature as necessary. By allowing inflow and outflow of medium-temperature thermal storage fluid in the middle in this manner, operations such as more extensively expanding and operating the system, for example by connecting to a separate external heat source or external cooling source, or improving the overall system performance by appropriately raising or lowering the temperature during energy storage or recovery, can be realized.

The thermal energy storage device having a temperature gradient of the present invention can be scaled up to large capacity in various ways. In the thermal energy storage device (100), a connected assembly of a plurality of cells in which a temperature gradient is formed so as to go from low temperature to high temperature from one side to the other side is referred to as a unit row. Various large-capacity configurations are possible depending on how these unit rows are stacked and arranged.

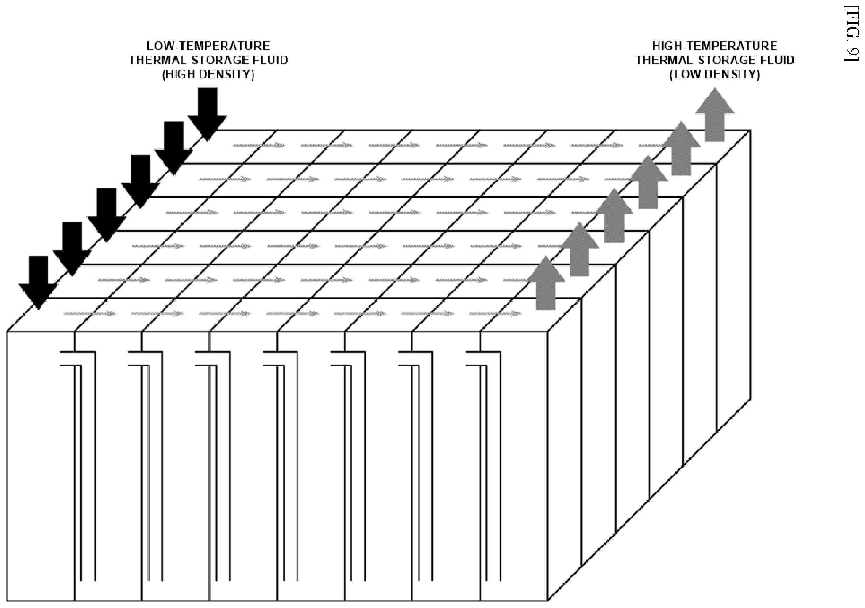

FIG. 9 shows an embodiment of Parallel Configuration 1. In FIG. 9, a plurality of unit rows are stacked and arranged in a parallel-connected form, whereby a temperature gradient is formed in the stack as a whole such that the temperature goes from low temperature to high temperature from one side to the other side. That is, the unit rows are arranged in parallel to achieve large-capacity scaling. In this case, since the hydrostatic head pressures of neighboring tanks are the same, the wall thickness of the intermediate tanks can be reduced. The arrows in FIG. 9 indicate the fluid flow for the energy discharge mode.

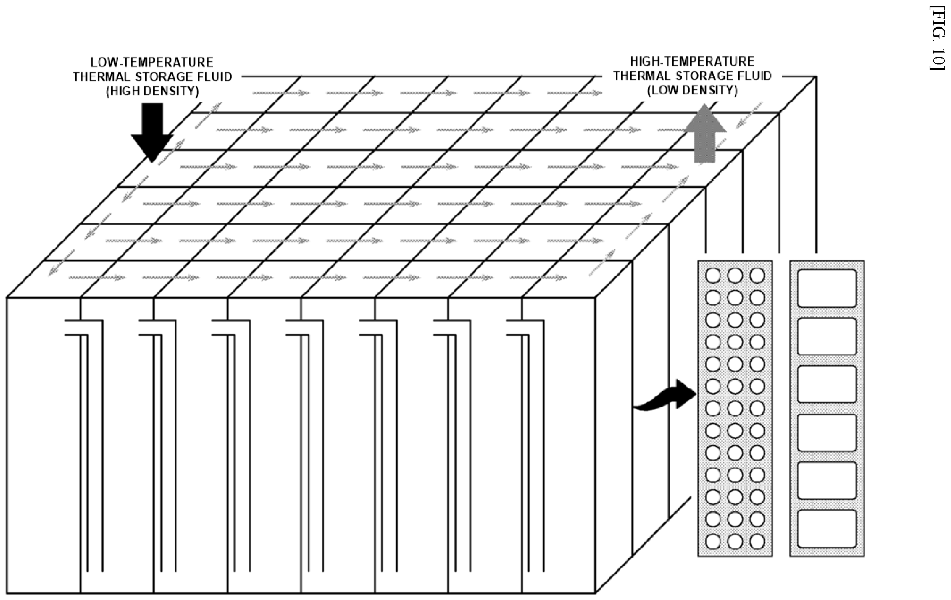

FIG. 10 shows an embodiment of Parallel Configuration 2. Parallel Configuration 2 is a modification of Parallel Configuration 1 in which the structure between neighboring unit rows is changed to one in which fluid can easily move back and forth. That is, the thermal storage fluid is formed so as to be able to flow through the boundary surfaces between unit rows. In this manner, the number of pumps and the number of outlets can be reduced. In FIG. 10, the parts indicated by arrows are boundary surfaces through which fluid can pass, and an example of the structure of such a boundary plate is shown at the end of the arrows. The arrows in FIG. 10 also indicate the fluid flow for the energy discharge mode.

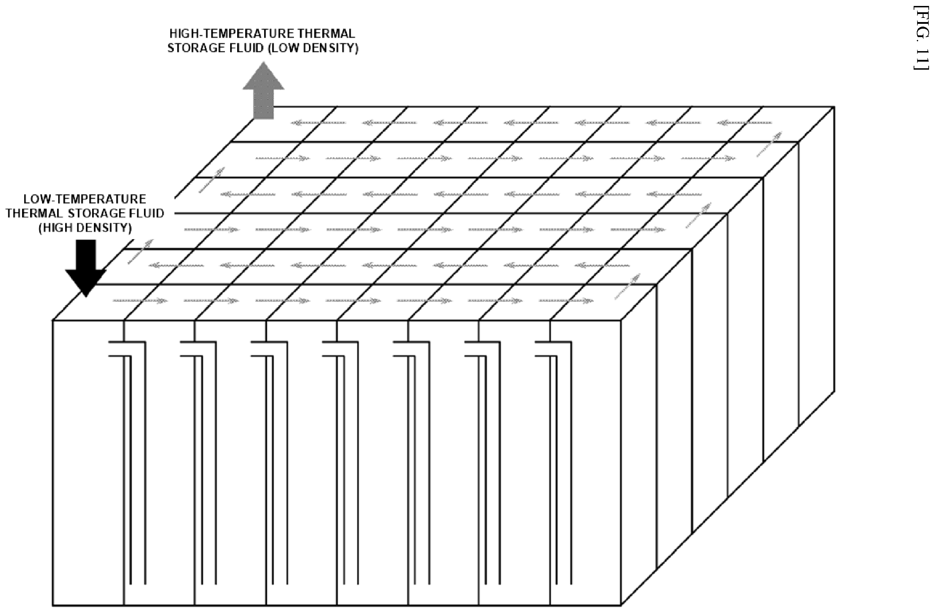

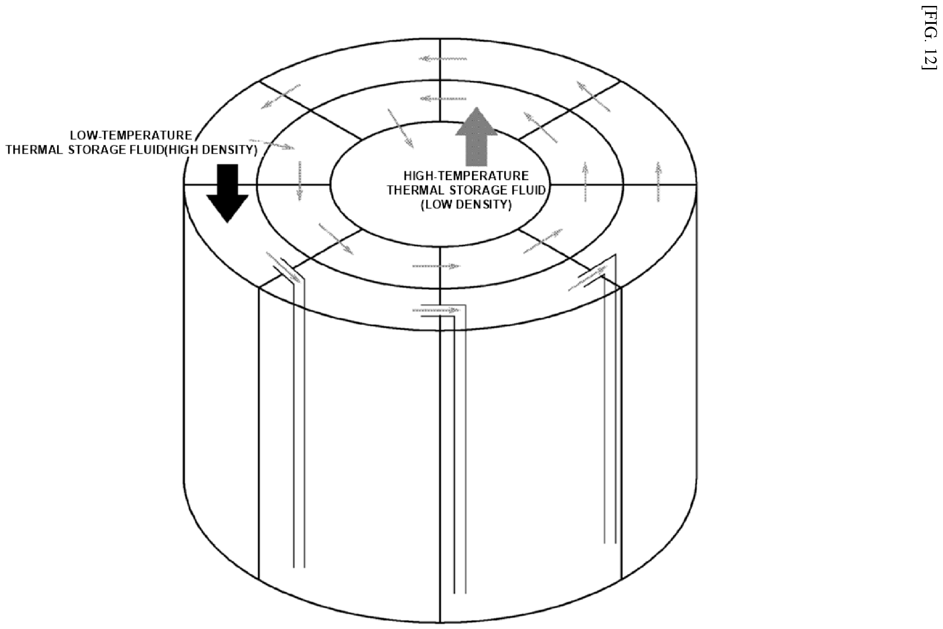

FIGS. 11 and 12 show examples of large-capacity scaling using a serial configuration. That is, a plurality of unit rows are stacked and arranged in a series-connected form, whereby a temperature gradient is formed such that the temperature goes from low temperature to high temperature while sequentially following the unit rows. Meanwhile, it is the same for both the parallel configuration and the serial configuration that the direction of temperature gradient within a unit row and the direction of stacked arrangement of the unit rows are formed perpendicular to each other; however, in the parallel configuration of FIGS. 9 and 10 or the serial configuration of FIG. 11, the direction of temperature gradient is the horizontal direction, the direction of stacked arrangement is the vertical direction, and the direction of gravity is the height direction, whereby the stack of unit rows forms a rectangular parallelepiped. In the serial configuration of FIG. 12, on the other hand, the direction of temperature gradient is the tangential direction, the direction of stacked arrangement is the radial direction, and the direction of gravity is the height direction, whereby the stack of unit rows forms a cylindrical shape. The arrows in FIGS. 11 and 12 also indicate the fluid flow for the energy discharge mode.

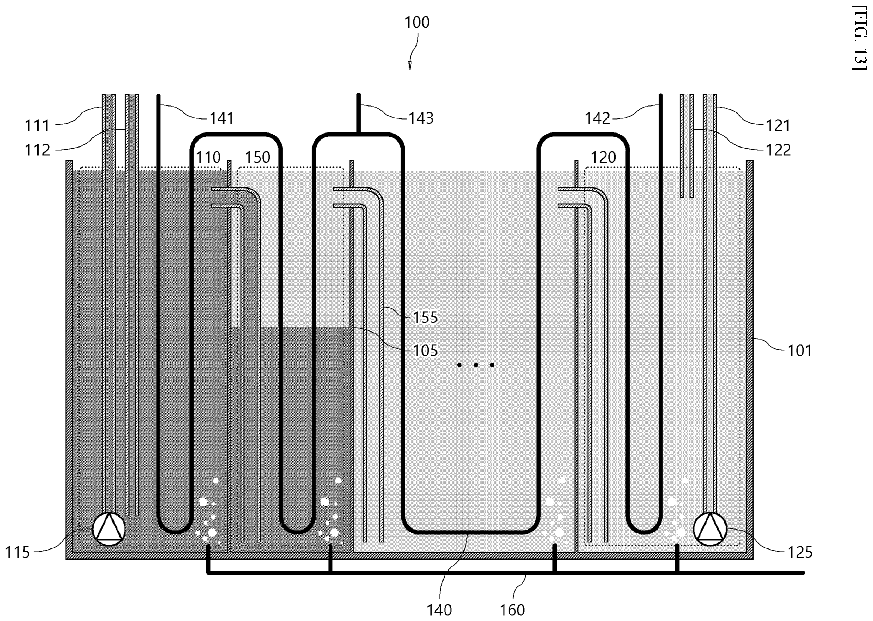

FIG. 13 shows an embodiment of heat recovery using a pipe, in which case a heat recovery pipe (140) may further be provided. The heat recovery pipe is formed so as to recover heat in place of an external cooling source, and is formed in the shape of a pipe that sequentially passes through the cells in the storage tank (101) from the low-temperature section (110) to the high-temperature section (120), through which a heat recovery fluid flows. As shown, a heat recovery inlet (141) is formed on the side of the low-temperature section (110) and a heat recovery outlet (142) is formed on the side of the high-temperature section (120), enabling the heat recovery fluid to flow in and out. Furthermore, a heat recovery bypass (143) is formed at an intermediate point, enabling the medium-temperature heat recovery fluid to be bypassed therefrom as necessary. Various media are possible as the heat recovery fluid, and water-steam is generally widely used.

In addition, a bubble injection pipe (160) for introducing a bubbling fluid into the lower portion of the cells in the storage tank (101) may further be provided. The bubbling gas injected through the bubble injection pipe (160) forcibly creates an active flow while passing through the thermal storage fluid, thereby making it possible to increase the rate of heat transfer to the heat recovery fluid.

The present invention is not limited to the embodiments described above, and its scope of application is of course wide and varied, and various modifications may of course be made by any person having ordinary skill in the field to which the present invention pertains without departing from the gist of the present invention as claimed in the claims.

### [INDUSTRIAL APPLICABILITY]

According to the present invention, high-temperature energy can be stored in a single tank in which the fluid level is maintained constant, thereby minimizing the number of tanks and accordingly minimizing pumps, field devices, piping, and the like, resulting in an economical effect of minimizing initial investment costs and operating costs.

## Claims

1. A thermal energy storage device comprising:
a storage tank (101) in which a thermal storage fluid is accommodated;
a cell partition plate (105) that separates the storage tank (101) into a plurality of cells;
a cell connection pipe (155) that connects an upper portion of one cell and a lower portion of the other cell among a pair of mutually neighboring cells;
a low-temperature section pump (115) provided in a cell located at one end among the cells in the storage tank (101) and configured to transfer a low-temperature thermal storage fluid; and
a high-temperature section pump (125) provided in a cell located at the other end among the cells in the storage tank (101) and configured to transfer a high-temperature thermal storage fluid.

2. The thermal energy storage device (100) according to claim 1, wherein:
a cell located at one end among the cells in the storage tank (101) is referred to as a low-temperature section (110), and a cell located at the other end among the cells in the storage tank (101) is referred to as a high-temperature section (120);
the thermal storage fluid stored in the low-temperature section (110) is formed at a lower temperature than the thermal storage fluid stored in the other cells, and the thermal storage fluid stored in the high-temperature section (120) is formed at a higher temperature than the thermal storage fluid stored in the other cells; and
a temperature gradient is formed in the thermal storage fluid in the storage tank (101) such that the temperature of the thermal storage fluid stored in each cell gradually increases from the low-temperature section (110) toward the high-temperature section (120).

3. The thermal energy storage device (100) according to claim 2, wherein:
the low-temperature section (110) is provided with a low-temperature discharge pipe (111) connected to the low-temperature section pump (115) and configured to discharge a low-temperature thermal storage fluid in the low-temperature section (110) to the exterior, and a low-temperature inlet pipe (112) communicating with a lower portion that is relatively cooler within the low-temperature section (110) and configured to receive low-temperature thermal storage fluid from the exterior; and
the high-temperature section (120) is provided with a high-temperature discharge pipe (121) connected to the high-temperature section pump (125) and configured to discharge a high-temperature thermal storage fluid in the high-temperature section (120) to the exterior, and a high-temperature inlet pipe (122) communicating with an upper portion that is relatively hotter within the high-temperature section (120) and configured to receive high-temperature thermal storage fluid from the exterior.

4. The thermal energy storage device (100) according to claim 3, wherein:
the cell connection pipe (155) that places a pair of mutually neighboring cells in communication with each other comprises an upper flow port (151) communicating with an upper portion that is relatively hotter within the one cell on the side of the low-temperature section (110) or the low-temperature section (110), and a lower flow port (152) communicating with a lower portion that is relatively cooler within the other cell on the side of the high-temperature section (120) or the high-temperature section (120); and
the thermal energy storage device is formed so as to minimize a temperature difference between the thermal storage fluids transferred through and between the cells, by bringing into direct communication with each other the thermal storage fluid in the one cell that is relatively cooler as between the one cell and the other cell and that is relatively hotter as between the upper portion and the lower portion, and the thermal storage fluid in the other cell that is relatively hotter as between the one cell and the other cell and that is relatively cooler as between the upper portion and the lower portion.

5. The thermal energy storage device according to claim 4, wherein the cell connection pipe (155) is provided with a flow rate controller (153) for controlling a flow rate of the thermal storage fluid passing through the cell connection pipe (155).

6. The thermal energy storage device (100) according to claim 4, wherein in an energy storage mode:
a high-temperature thermal storage fluid heated in an external heat source flows into the high-temperature section (120) at the other end through the high-temperature inlet pipe (122);
as the thermal storage fluid in the high-temperature section (120) is transferred from the other side to one side of the storage tank (101) through at least one cell connection pipe (155), a temperature gradient is formed such that the temperature of the cells decreases from high temperature to low temperature going from the other side to one side; and
the low-temperature thermal storage fluid, whose temperature has decreased in the course of being transferred, is delivered to the external heat source through the low-temperature section pump (115) provided in the low-temperature section (110) at one end, and is again heated in the external heat source, thereby achieving circulation.

7. The thermal energy storage device (100) according to claim 4, wherein in an energy recovery mode:
a low-temperature thermal storage fluid cooled in an external cooling source flows into the low-temperature section (110) at one end through the low-temperature inlet pipe (112);
as the thermal storage fluid in the low-temperature section (110) is transferred from one side to the other side of the storage tank (101) through at least one cell connection pipe (155), a temperature gradient is formed such that the temperature of the cells increases from low temperature to high temperature going from one side to the other side; and
the high-temperature thermal storage fluid, whose temperature has risen in the course of being transferred, is delivered to the external cooling source through the high-temperature section pump (125) provided in the high-temperature section (120) at the other end, and is again cooled in the external cooling source, thereby achieving circulation.

8. The thermal energy storage device (100) according to claim 4, further comprising:
at least one unit section (150) each formed as a cell disposed between the low-temperature section (110) and the high-temperature section (120).

9. The thermal energy storage device (100) according to claim 8, wherein the thermal energy storage device (100) comprises a plurality of unit sections (150), and at least one unit section (150) selected from among the plurality of unit sections (150) forms a medium-temperature section (130); and
the medium-temperature section (130) is provided with a medium-temperature section pump (135), a medium-temperature discharge pipe (131) connected to the medium-temperature section pump (135) and configured to discharge the thermal storage fluid in the medium-temperature section (130) to the exterior, and a medium-temperature inlet pipe (132) communicating with the interior of the medium-temperature section (130) and configured to receive thermal storage fluid from the exterior.

10. The thermal energy storage device (100) according to claim 4, wherein, when a connected assembly of a plurality of cells in which a temperature gradient is formed so as to go from low temperature to high temperature from one side to the other side is referred to as a unit row:
a plurality of unit rows are stacked and arranged in a parallel-connected form, whereby a temperature gradient is formed in the stack as a whole such that the temperature goes from low temperature to high temperature from one side to the other side; or
a plurality of unit rows are stacked and arranged in a series-connected form, whereby a temperature gradient is formed such that the temperature goes from low temperature to high temperature while sequentially following the unit rows.

11. The thermal energy storage device (100) according to claim 10, wherein the direction of temperature gradient within a unit row and the direction of stacked arrangement of the unit rows are formed perpendicular to each other, and:
the direction of temperature gradient is the horizontal direction, the direction of stacked arrangement is the vertical direction, and the direction of gravity is the height direction, whereby the stack of unit rows forms a rectangular parallelepiped; or
the direction of temperature gradient is the tangential direction, the direction of stacked arrangement is the radial direction, and the direction of gravity is the height direction, whereby the stack of unit rows forms a cylindrical shape.

12. The thermal energy storage device (100) according to claim 10, wherein the thermal energy storage device (100) is configured such that the thermal storage fluid is able to flow through boundary surfaces between unit rows.

13. The thermal energy storage device (100) according to claim 4, further comprising:
a heat recovery pipe (140) in the form of a pipe that sequentially passes through the cells in the storage tank (101) from the low-temperature section (110) to the high-temperature section (120), through which a heat recovery fluid flows.

14. The thermal energy storage device (100) according to claim 4, further comprising:
a bubble injection pipe (160) configured to introduce a bubbling fluid into a lower portion of the cells in the storage tank (101).
